(19) **Europäisches Patentamt**

**European Patent Office**

**Office européen des brevets**

(11) Veröffentlichungsnummer : **0 387 405 B1**

(12) **EUROPÄISCHE PATENTSCHRIFT**

(45) Veröffentlichungstag der Patentschrift :
**23.12.92 Patentblatt 92/52**

(51) Int. Cl.⁵ : **F41H 5/22**

(21) Anmeldenummer : **89121107.0**

(22) Anmeldetag : **15.11.89**

(54) **Verriegelungs- und Aufschwenkmechanismus für einen mit Panzerschutz ausgerüsteten Dachlukendeckel.**

(30) Priorität : **17.03.89 DE 3908789**

(43) Veröffentlichungstag der Anmeldung :
**19.09.90 Patentblatt 90/38**

(45) Bekanntmachung des Hinweises auf die
Patenterteilung :
**23.12.92 Patentblatt 92/52**

(84) Benannte Vertragsstaaten :
**CH DE LI NL SE**

(56) Entgegenhaltungen :
**CH-A- 595 605**
**DE-A- 3 245 686**
**US-A- 2 239 327**

(73) Patentinhaber : **Rheinmetall GmbH**
**Ulmenstrasse 125 Postfach 6609**
**W-4000 Düsseldorf (DE)**

(72) Erfinder : **Metz, Josef**
**Gilbachstrasse 42**
**W-4040 Neuss 1 (DE)**
Erfinder : **Pehker, Manfred**
**Wupperstrasse 40**
**W-4000 Düsseldorf (DE)**

## Beschreibung

Die Erfindung betrifft einen Dachlukendeckel nach den im Oberbegriff des Patentanspruchs 1 angegebenen Merkmalen.

Derartige Dachlukendeckel sind allgemein bekannt und werden vielfach in Kampfpanzertürmen eingesetzt. Sie lassen sich von der Panzerturminnenseite, beispielsweise durch ein Handrad und von der Panzerturmaußenseite durch einen Handgriff verriegeln bzw. öffnen. Es wird jedoch bei der Bedienung als nachteilig angesehen, daß sich die Dachlukenverriegelung, insbesondere die Verriegelungsschieber, auch bei geöffnetem Dachlukendeckel durch das Handrad verstellen lassen. Es besteht dadurch die Gefahr, daß bei der Schließbewegung des Dachlukendeckels durch eine in der Stellung "Geschlossen" stehende Verriegelung, die Verriegelungsschieber Schäden an der Dachlukendichtung verursachen.

Zur Realisierung dieses Problems ist es bei herkömmlichen Dachlukendeckeln zweckmäßig, innerhalb desselben mindestens eine Sperrvorrichtung anzuordnen, die eine Verstellung der Verriegelungsschieber bei einem geöffneten Dachlukendeckel verhindert. Derartige Sperrvorrichtungen können jedoch dann nicht innerhalb des Dachlukendeckels eingesetzt werden, wenn die Dachpartien des Panzerfahrzeuges und somit auch der bzw. die Dachlukendeckel mit einer geeigneten Schutzpanzerung als Abwehrmaßnahme gegen eine Bedrohung aus der Luft ausgerüstet sind. Zur Erzielung eines größtmöglichen Dachschutzes ist es notwendig, den dafür vorgesehenen Bauraum, beispielsweise innerhalb und in der unmittelbaren äußeren Umgebung des Dachlukendeckels nicht durch Gegenstände wie die vorgenannte Sperrvorrichtung oder eine zur Unterstützung der Öffnungs- und Schließbewegung des Dachlukendeckels notwendige und durch ihre Länge sehr raumaufwendige Zugfeder auszufüllen. Eine im Außenbereich angeordnete Zugfeder müßte insbesondere zum Ausgleich eines durch den Panzerschutz erheblich schwerer gewordenen Dachlukendeckels entsprechend verstärkt und vergrößert werden, wodurch aufgrund der größeren Federlänge weniger Raum zur Anordnung des Panzerschutzes, beispielsweise auf dem Panzerdach zur Verfügung stehen würde.

Demgegenüber ist es Aufgabe der Erfindung, einen Dachlukendeckel bereitzustellen, der zur optimalen Nutzung eines Panzerschutzes einen maximalen Raumbedarf innerhalb und außerhalb des Dachlukendeckels gewährleistet und eine Fehlbedienung ausschließt.

Gelöst wird diese Aufgabe durch die im Kennzeichen des Patentanspruchs 1 angegebene Erfindung.

Durch die erfindungsgemäße Sperrvorrichtung für den Verriegelungsmechanismus und ihre Anordnung im Außenbereich des Dachlukendeckels wird vorteilhaft einerseits im Innenbereich des Dachlukendeckels eine maximale Raumausnutzung zur Anordnung eines Panzerschutzes ermöglicht und andererseits eine Sperrvorrichtung geschaffen, die während des gesamten Öffnungsvorganges des Dachlukendeckels eine manuelle Verstellmöglichkeit der verriegelungsschieber mit Sicherheit ausschließt und dadurch weiter vorteilhaft Schäden, insbesondere an der Dachlukendichtung, beim Schließen des Dachlukendeckels verhindert.

Die erfindungsgemäße Anordnung von mindestens einer Torsionsfeder ermöglicht in weiter vorteilhafter Weise nicht nur eine raumsparende Anordnung um die nahe am Dachlukendeckel befindliche Schwenkachse desselben und somit eine größere Nutzungsfläche eines vorzugsweise aktiven Panzerschutzes auch in unmittelbarer Nähe des Dachlukendeckels auf dem Turmdach, sondern auch einen wirkungsvollen Ausgleich beim Öffnen und Schließen des durch den Panzerschutz wesentlich schwerer gewordenen Dachlukendeckels. Durch die außenseitig am Dachlukendeckel vorgesehene Anordnung der Sperrvorrichtung werden im Innenbereich des Dachlukendeckels Bereiche ohne Panzerschutz als sogenannte "ballistische Löcher" vermieden und durch die raumsparende Torsionsfederanordnung im Außenbereich des Dachlukendeckels auf ein Minimum reduziert.

Vorteilhafte Ausgestaltungen gehen aus den Merkmalen der Unteransprüche hervor.

Die Sperrvorrichtung zeichnet sich dadurch aus, daß sie ausschließlich nur beim Öffnen und Schließen des Dachlukendeckels wirksam werden kann und stabil durch eine Formschlußverbindung eines Arretierschiebers mit der Welle des Verriegelungsmechanismus eine Drehbewegung der Welle und somit der Verriegelungsschieber zuverlässig verhindert.

In besonders vorteilhafter Weise lassen sich entsprechend dem jeweiligen Dachlukendeckelgewicht mehrere Torsionsfedern paketweise nebeneinander auf der Schwenkachse des Dachlukendeckels befestigen und zur Erzielung eines optimalen Gewichtsausgleiches durch eine Verstellvorrichtung vorspannen.

Des weiteren enthält das am Dachlukendeckel angeschlossene Gehäuse der Torsionsfedern einfache Vorrichtungen zum Dämpfen der einzunehmenden Öffnungsstellung des weiteren eine Raste zum Fixieren dieser Stellung und zum Einleiten der Schließbewegung einen Handhebel zum manuellen Entriegeln der Öffnungsstellung.

Die Welle des Verriegelungsmechanimus ist zur Gewährleistung einer sicheren Übertragung der Funktionsbefehle vom Arretierschieber auf die Verriegelungsschieber robust in einem Außenlager gelagert, wodurch die Welle nicht nur axial und radial gesichert ist, sondern auch eine spielfreie Drehbewegung auf einfache Weise einstellbar ist.

Die Erfindung wird anhand eines in den Zeichnungen dargestellten Ausführungsbeispieles des näheren erläutert.

Es zeigt:

Figur 1: Ausschnittsweise ein Panzerturmdach mit zwei angeordneten Dachlukendeckeln in einer Draufsicht;

Figur 2: einen Querschnitt des Dachlukendeckels entlang dem in der Figur 1 mit II-II gekennzeichneten Schnittverlauf;

Figur 3: einen vergrößerten Querschnitt des Dachlukendeckels entlang der in der Figur 1 mit III-III gekennzeichneten Schnittverlauf;

Figur 4: eine vergrößerte Darstellung der in der Figur 3 mit IV gekennzeichneten Einzelheit;

Figur 5: einen in der Figur 4 mit V-V gekennzeichneten Schnittverlauf;

Figur 6: eine vergrößerte Darstellung des Lukendeckellagers gemäß dem rechten Teil des in der Figur 3 dargestellten Querschnittes;

Figur 7: eine Draufsicht der Lukendeckellagerung gemäß der in der Figur 6 angezeigten Pfeilrichtung VII;

Figur 8: eine in der Figur 7 mit VIII gekennzeichnete Seitenansicht;

Figur 9: einen in der Figur 7 mit IX-IX gekennzeichneten Schnittverlauf;

Figur 10: einen in der Figur 8 mit X-X gekennzeichneten Schnittverlauf;

Figur 11: einen in der Figur 8 mit XI-XI gekennzeichneten Schnittverlauf;

Figur 12: eine Seitenansicht des in geöffneter Stellung befindlichen Dachlukendeckels.

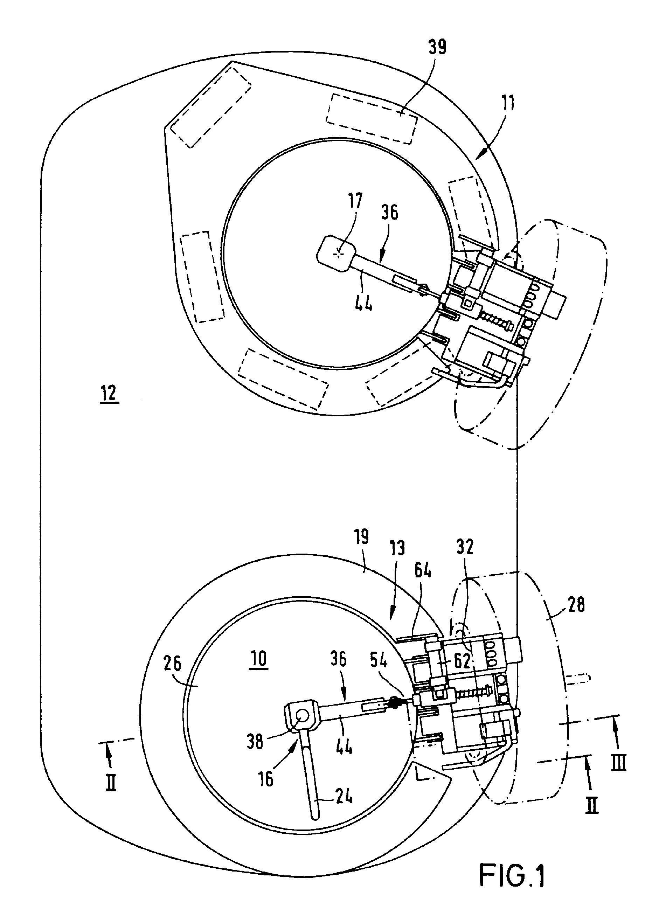

Die Figur 1 verdeutlicht ausschnittsweise ein Kampfpanzerturmdach 12 mit einer Anordnung einer Kommandantenluke 11 und einer Ladeschützenluke 13. Beide Dachluken 11, 13 sind mit jeweils einem aus einer Schließstellung 26 in eine Öffnungsstellung 28 um eine Achse 32 schwenkbaren Dachlukendeckel 10 ausgerüstet.

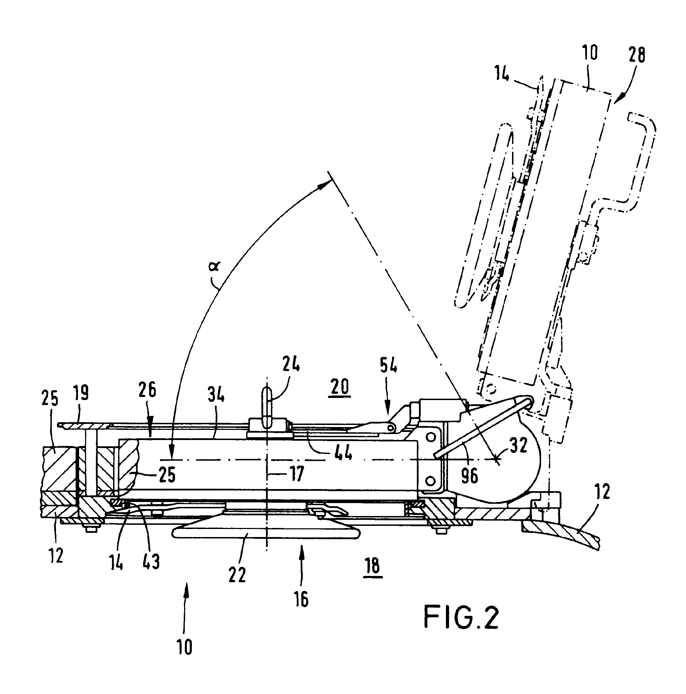

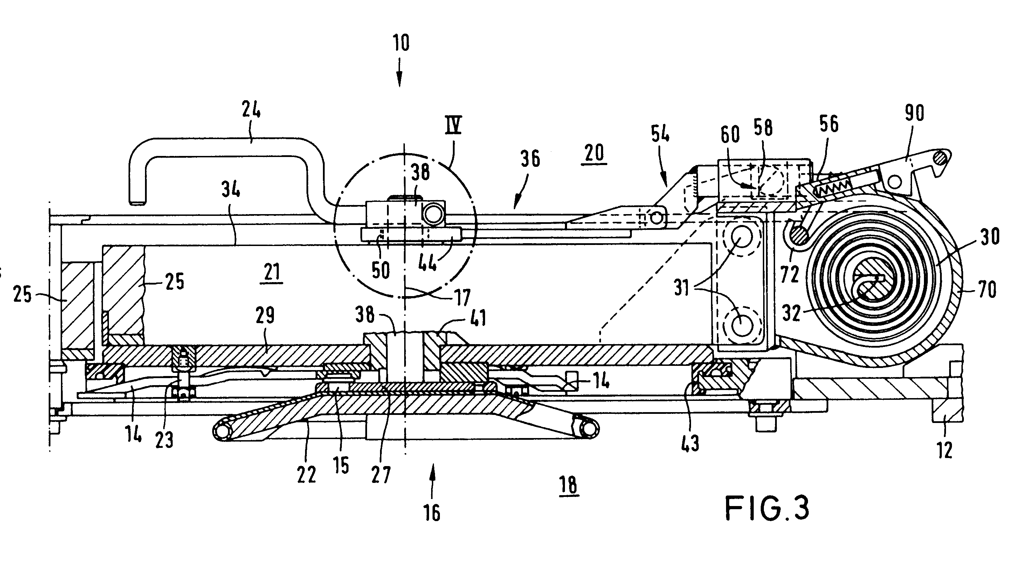

Jeder Dachlukendeckel 10 ist mit einem Verriegelungsmechanismus 16 zum Ver- und Entriegeln ausgerüstet, welcher vorzugsweise drei Verriegelungsschieber 14 (Figuren 2, 3) enthält, die über eine auf der Symmetrieachse 17 des Dachlukendeckels 10 befestigte Welle 38 einmal von dem Turminnenraum 18 (Figuren 2, 3) und von der Turmaussenseite 20 (Figur 2, 3) her durch Betätigungsmittel 22, 24 bedienbar ist. Das Betätigungsmittel 24 ist außenseitig als Handgriff ausgebildet, mit welchem die Ladeschützenluke 13 nach Verlassen des Kampfpanzerturmes 12 von außen verriegel- und abschließbar ist.

Auf dem anderen Ende der Welle 38 ist als Betätigungsmittel 22 ein vom Turminnenraum 18 betätigbares Handrad (Figuren 2, 3) angeschlossen. Zur Vermeidung von Schäden, insbesondere an der Lukendichtung 43, muß eine Verstellung der beim Öffnen des Dachlukendeckels 10 eingenommenen Position der Verriegelungsschieber 14 (Figur 2) verhindert werden. Dazu enthält jeder Dachlukendeckel 10 auf seiner Außenseite 34 (Figur 2) eine Sperrvorrichtung 36, die während des gesamten Öffnungsvorganges des Dachlukendeckels 10 die Welle 38 formschlüssig blockiert, wodurch weder der Handhebel 29 noch das Handrad 22 manuell betätigt werden können.

Die Sperrvorrichtung 36 enthält einen mit einem Betätigungsgestänge 54 verbundenen Arretierschieber 44, der in Abhängigkeit von einer durch einen Schlepphebel 64 eingeleiteten Drehbewegung einer Nockenwelle 62 eine Blockierstellung gegenüber der Welle 38 einnimmt.

Die Kommandantenluke 11 ist unterschiedlich zur Ladeschützenluke 13 mit bekannten Sichtgeräten 39 ausgerüstet. Der Dachlukendeckel 10 der Kommandantenluke 11 enthält aussenseitig keinen Handgriff 24, er ist deshalb nur vom Turminnenraum 18 her ver- und entriegelbar. Die Ladeschützenluke 13 ist demgegenüber mit einem an sich bekannten Ring 19 zur Aufnahme eines nicht zur Erfindung gehörenden FLA-Maschinengewehres ausgerüstet.

Die Figuren 2 und 3 lassen erkennen, daß nicht nur das Dach des Kampfpanzerturmes 12, sondern mit Ausnahme der Welle 38 der gesamte Innenraum 21 des Dachlukendeckels 10 mit einem nicht näher beschriebenen vorzugsweise aktiven Panzerschutz 25 versehen ist. Der Panzerschutz 25 wird auf dem Dachlukendeckel 10 durch nicht dargestellte Befestigungsmittel gehalten, die auf einer Grundplatte 29 des Dachlukendeckels 10 befestigt sind. Mit der Grundplatte 29 ist zentral eine Lagerbuchse 41 zur Aufnahme der zum Verriegelungsmechanismus 16 gehörenden Welle 38 verbunden, wobei die Welle 38 innenseitig des Kampfpanzerturmes 12 das Handrad 22 und außenseitig den Handgriff 24 trägt.

Die sternförmig angeordneten Verriegelungsschieber 14 werden in mit der Grundplatte 29 verbundenen Führungen 23 gehalten und durch eine mit dem Handrad 22 verbundene Steuerscheibe 27 in radialer Richtung bewegt, wobei Gleitzapfen 15 der Verriegelungsschieber 14 in eine nicht näher dargestellte Kurve der Steuerscheibe 27 greifen. Durch eine einfache Drehung des Handrades 22 bzw. des Handhebels 24 werden auf diese Weise die Verriegelungsschieber 14 gegenüber dem Kampfpanzerturm 12 ver- und entriegelt.

Jeder Dachlukendeckel 10 ist an zwei vorzugsweise übereinander liegenden Anschlußstellen 31 mit einem Gehäuse 70 verbunden, das eine Schwenkachse 32 des Dachlukendeckels 10 und wenigstens eine um die Schwenkachse 32 angeordnete als Spiralfeder ausgebildete Torsionsfeder 30 aufnimmt. Die Torsionsfedern 30 weisen ein derartiges Torsionsmoment auf, daß sie den durch den Panzerschutz um über 100 % schwerer gewordenen Dachlukendeckel 10 nach dem Entriegeln der Schließstellung 26 innerhalb eines Drehwinkels α im Bereich von beispielsweise 15° - 105° um die Schwenkachse 32 schwenken können. Dadurch wird die manuell aufzubringende Kraft zur Unterstützung der Öffnungsbewegung des Dachlukendeckels 10 auf ein Minimum reduziert. Der Dachlukendeckel 10 ist in der Öffnungsstellung 28 durch eine Raste 90 feststellbar und durch einen Handhebel 96 wieder zur Durchführung der Schließbewegung lösbar.

Die Figur 3 läßt erkennen, daß der Arretierschieber 44 der Sperrvorrichtung 36 auf der Welle 38 des Verriegelungsmechanismus 16 zwischen einer durch Schrauben 37 lösbaren Befestigung des Handhebels 24 und einem axialen Außenlager 98 befestigt ist sowie durch das Betätigungsgestänge 54 lageveränderbar, vorzugsweise längsverschieblich ist.

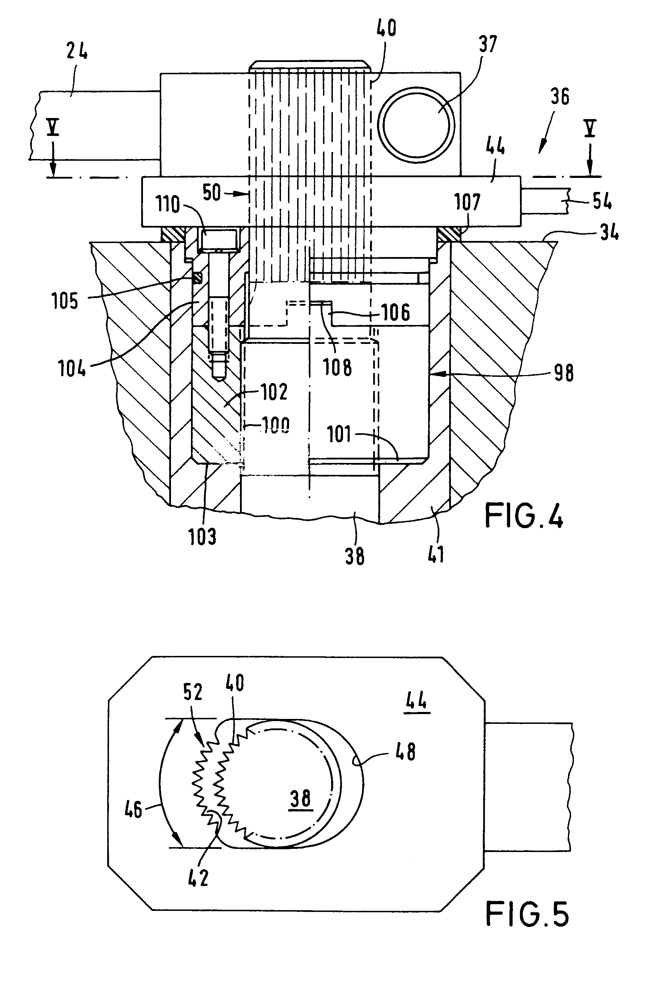

Die Figuren 4 und 5 verdeutlichen, daß die Welle 38 auf der Außenseite des Dachlukendeckels 10 ein Kerbzahnprofil 40 aufweist, das während des gesamten Öffnungsvorganges des Dachlukendeckels 10 mit dem das gleiche Kerbzahnprofil 42 aufweisenden Arretierschieber 44 formschlüssig verbunden ist. Unmittelbar vor der eingenommenen Schließstellung 26 des Dachlukendeckels 10 ist der Arretierschieber 44 durch das Betätigungsgestänge 54 derartig verschoben worden, daß die Kerbverzahnung 42 des Arretierschiebers 44 über dem Kerbzahnprofil 40 der Welle 38 außer Eingriff ist. Die die Welle 38 aufnehmende Öffnung des Arretierschiebers 44 ist zum Verschieben als Langloch 48 ausgebildet, wobei ausschließlich nur innerhalb eines kreisbogenförmigen Bereichs 46 eine Kerbverzahnung 42 angeordnet ist. Das Langloch 48 gestattet die Längsverschieblichkeit des Arretierschiebers 44 wobei in einer ersten während des Öffnungsvorganges des Dachlukendeckels 10 einnehmbaren Endstellung 50 die Welle 38 durch die Teil-Kerbverzahnung 42 blockiert ist und in einer während des Schließvorganges des Dachlukendeckels 10 einnehmbaren zweiten Endstellung 52 die Welle 38 frei beweglich ist.

Das axiale Außenlager 98 besteht aus einer über ein Gewinde 100 mit der Welle 38 verbundenen Stellmutter 102 und aus einem mit dem Kerbzahnprofil 40 der Welle 38 verbundenen Arretierring 104. Der Arretierring 104 enthält umfangsseitig eine auf eine Nase 106 der Stellmutter 102 steckbare Nute 108. Zur Erzeugung einer annähernd spielarmen Lagereinstellung zwischen einer Schulter 103 der Stellmutter 102 und einem Bohrungsabsatz 101 der Lagerbuchse 41 wird die Stellmutter 102 zunächst so lange auf die Welle 38 geschraubt, bis das minimale Spiel erreicht ist. Anschließend wird der Arretierring 104 auf das Kerbzahnprofil 40 der Welle 38 und auf die Nase 106 der Stellmutter 102 gesteckt und hierbei in dieser Stellung durch Schrauben 110 in axialer Richtung mit der Stellmutter 102 verbunden. Die Stellmutter 102 sorgt durch ihre großflächige axiale und radiale Anlage an der Lagerbuchse 41 für eine stabile Wellenlagerung. Im Bereich des Arretierringes schützen angeordnete Dichtungselemente 105, 107 den Turminnenraum 18 vor äußeren beispielsweise ABC Einflüssen.

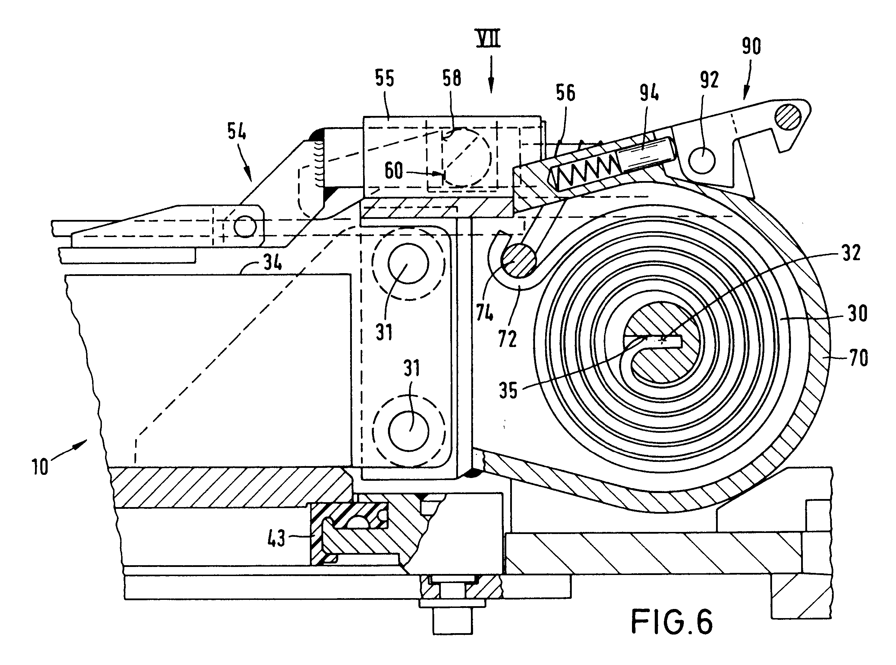

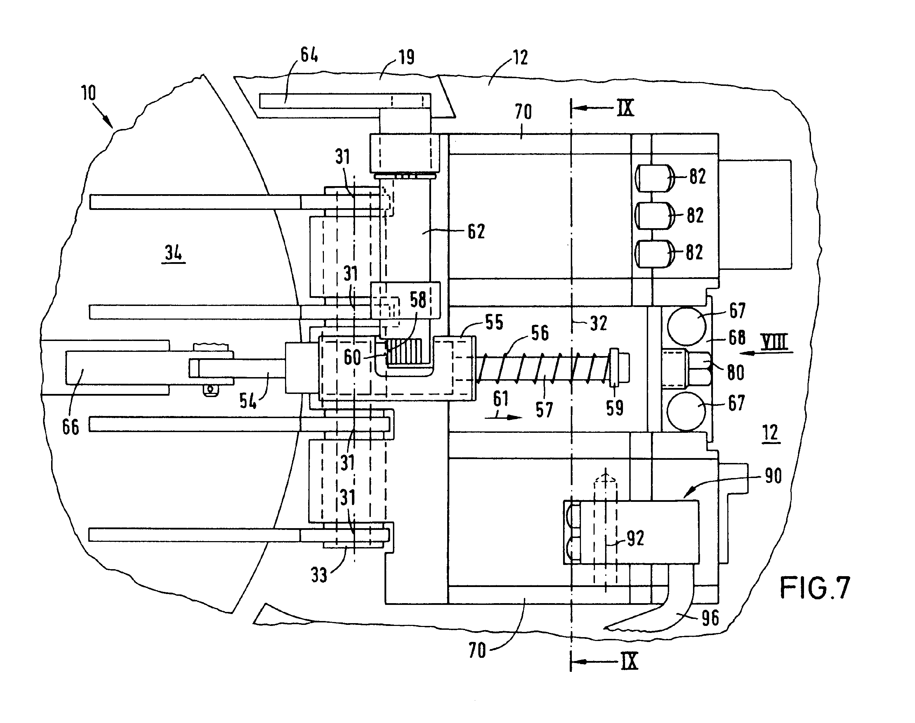

Anhand der Figuren 6 und 7 soll unter anderem erläutert werden, wie das Betätigungsgestänge 54 aufgebaut ist und wie es funktioniert. Das Betätigungsgestänge 54 ist einerseits mit dem vorbeschriebenen Arretierschieber 44 verbunden und wird andererseits auf dem entgegengesetzt angeordneten Ende in einer Führung 55 geführt, die auf dem mit dem Dachlukendeckel 10 verbundenen Gehäuse 70 befestigt ist.

Das Betätigungsgestänge 54 enthält an seinem freien Ende einen Stift 57, der abgewandt vom Arretierschieber 44 aus der Führung 55 herausragt und eine Druckfeder 56 aufnimmt, die sich an einem anliegenden Bund 59 des Stiftes 57 und an der Stirnseite der Führung 55 abstützt und somit auf das Betätigungsgestänge 54 und den Arretierschieber 44 eine vom Dachlukendeckel 10 wegweisende und in die Richtung 61 wirkende Kraft ausübt.

Das Betätigungsgestänge 54 ist im Bereich der Führung 55 U-förmig ausgespart und weist eine Anschlagfläche 58 auf, welche durch die Druckfeder 56 gegen einen Nocken 60 einer ebenfalls außenseitig auf dem Gehäuse 70 gelagerten Nockenwelle 62 gedrückt wird.

Das von der Anschlagfläche 58 abgewandte Ende der Nockenwelle 62 enthält einen zur ihr rechtwinklig angeordneten Schlepphebel 64, der in der Schließstellung 26 des Dachlukendeckels 10 sich mit seinem freien Ende auf dem Turmdach 12 bzw. auf dem FLA-MG-Ring 19 abstützt, während das freie Ende des Schlepphebels 64 in geöffneter Dachlukenstellung 28 sich vom Turmdach 12 bzw. vom FLA-MG-Ring 19 lösen kann.

Der Nocken 60 wird von zwei achsparallel und schräg zueinander verlaufenden Flächen 60.1, 60.2 der Nockenwelle 62 gebildet, wobei die vorgenannten Flächen gegenüber dem Nockenwellenquerschnitt Kreisabschnitte bzw. Teile davon bilden.

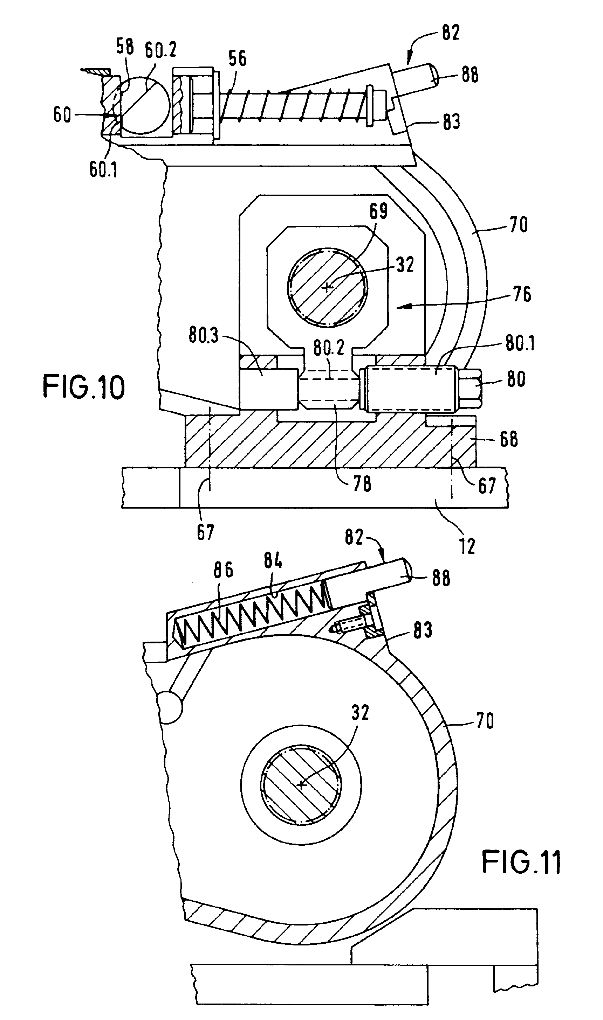

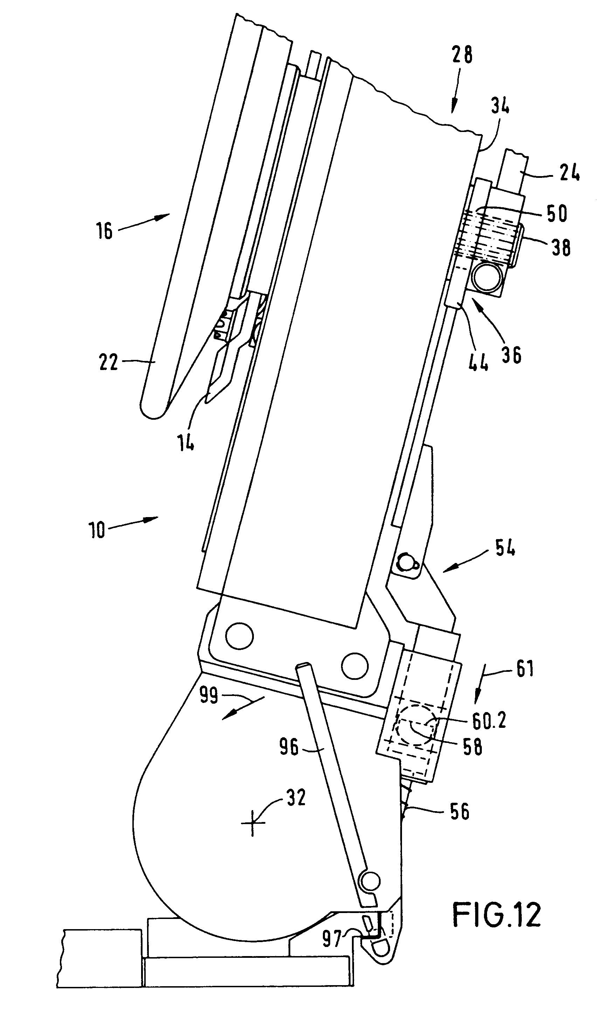

Die Figur 10 verdeutlicht, daß die Nockenfläche 60.1 schmaler ist als die vorzugsweise unter 45° zu ihr geneigte Nockenfläche 60.2. Beide Nockenflächen 60.1, 60.2 sind derartig mit der Lage des Schlepphebels 64 abgestimmt, daß in der Schließstellung 26 des Dachlukendeckels 10 das Betätigungsgestänge 54 und somit der Arretierschieber 44 gegen die Kraft der Feder 56 die zweite Endstellung 52 (Figur 5) eingenommen hat. Zur Einnahme dieser Endstellung 52 stützt sich beim Zuschwenken des Dachlukendeckels 10 der Schlepphebel 64 auf dem Turmdach 12 ab und dreht dabei den Nocken 60 so lange, bis die Nockenfläche 60.1 an der Anschlagfläche 58 zur Anlage kommt (Figuren 6, 7, 10). Beim Hochschwenken des Dachlukendeckels 10 in die Öffnungsstellung 28 löst sich einerseits der Schlepphebel 64 vom Turmdach 12, während andererseits die Anschlagfläche 58 unter der Kraft der Druckfeder 56 die Nockenfläche 60.1 so lange in Richtung 61 zurückbewegt, bis die größere Nockenfläche 60.2 an der Anschlagfläche 58 anliegt (Figur 12). Der dabei vom Arretierschieber 44 durchgeführte Längsverschub entspricht dem zur Einnahme der Blockierstellung des Verriegelungsmechanismus 16 notwendigen Verriegelungshub. In der Blockierstellung des Verriegelungsmechanismus 16 greift die Teilverzahnung 42 des Arretierschiebers 44 durch Einnahme der ersten Endstellung 50 in das Kerbzahnprofil 40 (Figur 5) der Welle 38 ein.

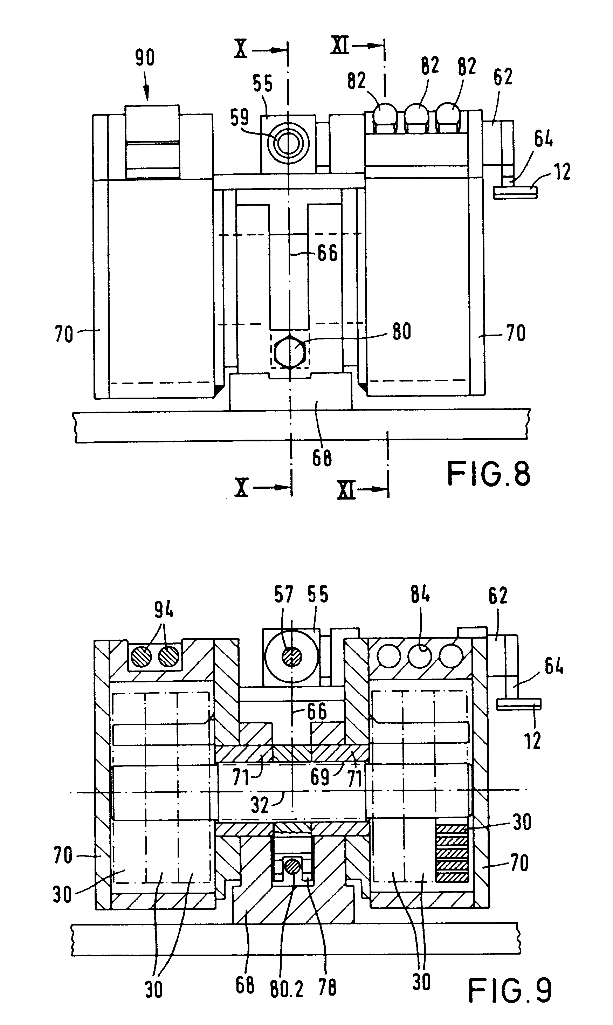

Wie zusätzlich auch die Figuren 8 bis 11 verdeutlichen, ist die Schwenkachse 32 quer innerhalb eines auf der Symmetrieachse 66 des Dachlukendeckels 10 liegenden Lagergehäuses 68 gelagert, das über nicht näher dargestellte Verbindungsmittel 67 an der Turmwand 12 angeschlossen ist. Im Bereich des Lagergehäuses 68 ist die Schwenkachse 32 über ein Zahnprofil 69 mit zwei im Gehäuse 68 drehbar gelagerten Buchsen 71 formschlüssig verbunden.

Die Schwenkachse 32 ragt beidseits über das Lagergehäuse 68 zur Aufnahme von mindestens einer vorzugsweise von auf jeder Seite drei angeordneten Torsionsfedern 30 hinaus. Die jeweils paketweise angeordneten Torsionsfedern 30 werden von je einem Gehäuseteil 70 umgeben, welche einerseits auf je einer zugeordneten Lagerbuchse 71 drehbar aufsitzen und andererseits zusammenhängend an den Anschlußstellen 31 über einen Bolzen 33 scharnierartig am Dachlukendeckel 10 angeschlossen sind. Zur Erzeugung eines notwendigen Aufschwenkmomentes des Dachlukendeckels 10 ist jede Torsionsfeder 30 innenseitig in einer Querbohrung 35 der Schwenkachse 32 und an ihrem äußeren Ende 72 in einem am Gehäuse 70 befestigten Gegenlager 74 abgestützt.

Alle Torsionsfedern 30 können gemeinsam in Abhängigkeit des jeweiligen Dachlukendeckelgewichtes auf ein vorbestimmten Drehmoment eingestellt werden. Dazu ist die Schwenkachse 32 mit einer Vorrichtung 76 zum Verstellen der Vorspannung der Torsionsfedern 30 ausgerüstet. Diese Vorrichtung 76 besteht aus einem formschlüssig mit der Schwenkachse 32 über das Zahnprofil 69 verbundenen und zwischen den Lagerbuchsen 71 angeordneten Verstellhebel 78, der über eine im turmfesten Lagergehäuse 68 angeordnete Verstellmutter 80 zur Vorspannung der Torsionsfeder verstellbar ist.

Die Verstellschraube 80 besteht dabei aus einem Gewindeabschnitt 80.1 zum Verstellen, einem abgesetzten Zylinder 80.2 und einem im Gehäuse 68 gelagerten Führungszylinder 80.3. Der abgesetzte Bereich 80.2 der Verstellschraube 80 wird zur Bewegungsübertragung gabelförmig von dem Verstellhebel 78 umschlossen. Durch eine Drehbewegung der Verstellschraube 80 ist auf einfache Weise von außen die Vorspannung der Torsionsfedern 30 auf das gewünschte Moment einstellbar.

Um den Anschlag während der Einnahme der Öffnungsstellung 28 des Dachlukendeckels 10 zu dämpfen, ist ein Gehäuseteil 70 mit mindestens einem dämpfenden Element 82 ausgestattet. Der Gehäuseteil 70 nimmt dazu quer zu einer auf dem Kampfpanzerturm 12 in der Öffnungsstellung 28 aufliegenden Anschlagfläche 83 nebeneinander vorzugsweise drei Dämpfungselemente 82 auf, die jeweils aus einem in eine Bohrung 84 des Gehäuses 70 gegen die Kraft einer Druckfeder 86 einrückbaren Stift 88 bestehen.

Der Dachlukendeckel 10 wird in der geöffneten Stellung 28 automatisch festgehalten und kann zur Einleitung der Schließbewegung auf einfache Weise wieder entriegelt werden.

Dazu enthält ein Gehäuseteil 70 eine Raste 90, die schwenkbar um eine Achse 92 gelagert ist. Die Raste 90 wird von mindestens einem, vorzugsweise zwei, federbeaufschlagten Stiften 94 in der Fixierstellung gehalten. Sie enthält zur Entriegelung der Öffnungsstellung 28 einen fest an der Raste 90 angeschlossenen Handhebel 96, durch den die in der Figur 12 dargestellte Raststellung 97 durch manuelles Schwenken des Handrades 96 in die Richtung 99 wieder gelöst werden kann.

## Patentansprüche

1.  Dachlukendeckel (10) für einen Kampfpanzerturm (12), der zum Ver- und Entriegeln eines mit Verriegelungsschiebern (14) versehenen Verriegelungsmechanismus (16) vom Turminnenraum (18) und von der Turmaußenseite (20) her bedienbare Betätigungsmittel (22, 24) aufweist und nach dem Entriegeln, unterstützt durch eine Feder (30),aus einer Schließstellung (26) in eine Öffnungsstellung (28) um eine Schwenkachse (32) schwenkbar ist,
    **dadurch gekennzeichnet**, daß auf der Außenseite (34) des Dachlukendeckels (10) eine Sperrvorrichtung (36) für den Verriegelungsmechanismus (16) angeordnet ist, die während des gesamten Öffnungsvorganges des Dachlukendeckels (10) eine die Betätigungsmittel (22, 24) verbindende Welle (38) formschlüssig blockiert, und daß der Dachlukendeckel (10) mit mindestens einer um die Schwenkachse (32) angeordneten Torsionsfeder (30) ausgerüstet ist.

2.  Dachlukendeckel nach Anspruch 1,
    **dadurch gekennzeichnet**, daß die Welle (38) des Verriegelungsmechanismus (16) auf der Außenseite (34) des Dachlukendeckels (10) ein Kerbzahnprofil (40) aufweist, das während des gesamten Öffnungsvorganges des Dachlukendeckels (10) mit einem das gleiche Kerbzahnprofil (42) aufweisenden Arretierschieber (44) der Sperrvorrichtung (36) formschlüssig verbunden ist, wobei der Arretierschieber (44) derart lageveränderbar ist, daß bei einer eingenommenen Schließstellung (26) des Dachlukendeckels (10) die Kerbverzahnung (42) des Arretierschiebers (44) gegenüber dem Kerbzahnprofil (40) der Welle (38) ausser Eingriff ist.

3. Dachlukendeckel nach Anspruch 1 und 2, **dadurch gekennzeichnet**, daß der Arretierschieber (44) eine Teil-Kerbverzahnung (42) aufweist, die ausschließlich innerhalb eines kreisbogenförmigen Bereiches (46) eines Langloches (48) angeordnet ist, wobei das Langloch derartig bemessen ist, daß der Arretierschieber (44) längsverschieblich ist und in einer ersten während des Öffnungsvorganges des Dachlukendeckels (10) einnehmbaren Endstellung (50) die Welle (38) durch die Teil-Kerbverzahnung (42) blockiert ist und in einer während des Schließvorganges des Dachlukendeckels (10) einnehmbaren zweiten Endstellung (52) die Welle (38) frei beweglich ist.

4. Dachlukendeckel nach einem der Ansprüche 1 bis 3, **gekennzeichnet durch** folgende Merkmale:
a) der Arretierschieber (44) ist mit einem auf dem Dachlukendeckel (10) gelagerten Betätigungsgestänge (54) verbunden;
b) auf dem Betätigungsgestänge (54) ist ein Federelement (56) angeordnet, das eine Anschlagfläche (58) des Betätigungsgestänges (54) gegen einen Nocken (60) einer ebenfalls außenseitig auf dem Dachlukendeckel (10) gelagerten Nockenwelle (62) drückt;
c) die Nockenwelle (62) enthält einen in der Schließstellung (26) des Dachlukendeckels (10) sich auf dem Turmdach (12) abstützenden und in geöffneter Dachlukenstellung (28) sich vom Turmdach (12) lösenden Schlepphebel (64);
d) die Anordnung des Schlepphebels (64) ist gegenüber dem Nocken (60) derartig abgestimmt, daß in der Schließstellung (26) des Dachlukendeckels (10) das Betätigungsgestänge (54) und somit der Arretierschieber (44) gegen die kraft der Feder (56) die zweite Endstellung (52) eingenommen hat, während in der Öffnungsstellung (28) des Dachlukendeckels (10) unter der Kraft der Feder (56) die Anschlagfläche (58) den Nocken (60) zurückbewegt und der Arretierschieber (44) die zur Blockierung des Verriegelungsmechanismus (16) notwendige erste Endstellung eingenommen hat.

5. Dachlukendeckel nach Anspruch 1,

**dadurch gekennzeichnet**, daß die Schwenkachse (32) in einem auf der Symmetrieachse (66) des Dachlukendeckels (10) liegenden Lagergehäuse (68) turmfest gelagert ist und auf beiden Seiten dieses Lagergehäuses (68) jeweils in ein an dem Dachlukendeckel (10) angebundenes Gehäuse (70) zur Aufnahme mindestens einer Torsionsfeder (30) hineinragt.

6. Dachlukendeckel nach Anspruch 5, **dadurch gekennzeichnet**, daß jedes an den Dachlukendeckel (10) angebundenes Gehäuse (70) drei nebeneinander angeordnete und innenseitig fest auf der Schwenkachse (32) gelagerte Torsionsfedern (30) umschließt, deren äußere Enden (72) in einem gehäusefesten Gegenlager (74) abgestützt sind.

7. Dachlukendeckel nach einem der Ansprüche 1 bis 6, **dadurch gekennzeichnet**, daß die Schwenkachse (32) mit einer Vorrichtung (76) zum Verstellen der Vorspannung der Torsionsfedern (30) ausgerüstet ist.

8. Dachlukendeckel nach einem der Ansprüche 1 bis 7, **dadurch gekennzeichnet**, daß die Vorrichtung (76) zum Verstellen der Torsionsfeder-Vorspannung einen formschlüssig mit der Schwenkachse (32) verbundenen Verstellhebel (78) und eine im turmfesten Lagergehäuse (68) angeordnete und den Verstellhebel (78) bewegbare Verstellschraube (80) umfaßt.

9. Dachlukendeckel nach einem der Ansprüche 1 bis 8, **dadurch gekennzeichnet**, daß ein an dem Dachlukendeckel (10) angebundenes Gehäuse (70) mit mindestens einem die Einnahme der Öffnungsstellung (28) dämpfenden Element (82) ausgestattet ist.

10. Dachlukendeckel nach Anspruch 9, **dadurch gekennzeichnet**, daß das Dämpfungselement (82) aus einem in eine Bohrung (84) des Gehäuses (70) gegen die Kraft einer Druckfeder (86) einrückbaren Stift (88) besteht.

11. Dachlukendeckel nach einem der Ansprüche 1 bis 5, **gekennzeichnet durch** folgende Merkmale:
a) ein an dem Dachlukendeckel (10) befestigtes Gehäuse (70) enthält eine Raste (90) zum Fixieren der Öffnungsstellung (28) des Dachlukendeckels (10);
b) die Raste (90) ist schwenkbar um eine Achse (92) gelagert;

c) die Raste (90) wird von mindestens einem federkraftbeaufschlagten Stift (94) in der Fixierstellung gehalten und enthält einen fest angeschlossenen Handhebel (96) zur Entriegelung der Öffnungsstellung (28).

12. Dachlukendeckel nach einem der Ansprüche 1 bis 4, **gekennzeichnet durch** folgende Merkmale:

    a) auf der die Betätigungsmittel (22) verbindenden Welle (38) ist ein axiales Außenlager (98) angeordnet;

    b) das Außenlager (98) besteht aus einer über ein Gewinde (100) mit der Welle (38) verbundene Stellmutter (102) und aus einem mit dem Kerbzahnprofil (40) der Welle (38) verbundenen Arretierring (104);

    c) der Arretierring (104) enthält umfangsseitig eine auf eine Nase (106) der Stellmutter (102) steckbare Nute (108);

    d) der Arretierring (104) und die Stellmutter (102) sind über Schrauben (110) miteinander verbunden.

**Claims**

1. Roof hatch cover (10) for a tank turret (12) in which, for locking and unlocking an interlocking mechanism (16) provided with locking slides (14), actuating means (2,24) operable from the interior of the turret (18) and from the outside of the turret (20) are provided which, after the unlocking operation and assisted by a spring (30) are pivotable about a swivel shaft (32) from a closed position (26) into an opening position (28), characterised by the fact that on the outside (34) of the roof hatch cover (10) a locking device (36) for the locking mechanism (16) is provided by which, during the entire opening process of the cover (10), a shaft (38) connecting the actuating means (22,24) is locked with positive interlocking action, and that the cover (10) has at least one torsion spring (30) positioned around the swivel shaft (32).

2. Roof hatch cover in accordance with Claim 1, characterised by the fact that the shaft (38) of the interlocking mechanism (16) is provided, on the outside (34) of the cover (10), with a serrated profile (40) which, throughout the opening process of the cover (10), is positively interlocked with a locking slide (44) of the locking device (36) and having the same serrated profile (42), the locking slide (44) being adjustable in position in such a way that when the cover (10) has assumed a closed position (26) the serration (42) of the locking slide (44) is disengaged from the serration (40) of the shaft (38).

3. Roof hatch cover in accordance with Claims 1 and 2, characterised by the fact that the locking slide (44) has a partial serration (42) wholly situated within an arcuate zone (46) of a slot (48), the slot being dimensioned to ensure that the locking slide (44) is longitudinally displaceable and the shaft will be locked by the partial serration (42) in a first end position (50) which can be taken up during the opening process of the cover (10) and the shaft (38) will be freely movable in a second end position (52) which can be taken up during the closing process of the cover (10).

4. Roof hatch cover in accordance with any one of Claims 1 to 3, characterised by the following features:

    (a) the locking slide (44) is connected with an operating bar (54) mounted on the cover (10);

    (b) on the operating bar (54) is mounted a spring element (56) by which a contact surface (58) of the operating bar (54) is pressed against a cam (60) of a camshaft (62) also mounted on the outside of the cover (10);

    (c) the camshaft (62) contains a pull handle (64) which rests on the turret roof (12) when the cover (10) occupies the closed position (26) and detaches itself from the turret roof (12) when the cover (28) occupies the open position (28);

    (d) the arrangement of the pull handle (64) in relation to the cam (40) is coordinated in such a manner that when the cover (10) occupies the closed position (26) the operating bar (54) and thus the locking slide (44) has to assume the second end position (52) in opposition to the force of the spring (56), while when the cover (10) occupies the open position (28) the contact surface (58) moves the cam (60) back and the locking slide (44) has assumed the first end position required for blocking the interlocking mechanism (16).

5. Roof hatch cover in accordance with Claim 1, characterised by the fact that the swivel shaft (32) is mounted integral with the turret in a bearing housing (68) situated on the axis of symmetry (66) of the cover (10) and on each of the two sides of the said bearing housing(68) which extends into a housing (70) connected to the cover (10) and serving to accommodate at least one torsion spring (30).

6. Roof hatch cover in accordance with Claim 5, characterised by the fact that each housing (70) connected to the cover (10) surrounds three mutually adjacent torsion springs (30) which are permanently mounted on the inside of the swivel shaft (32) and of which the outer ends (72) are supported in a counter-bearing (74) integral with the housing.

7. Roof hatch cover in accordance with any one of Claims 1 to 6, characterised by the fact that the swivel shaft (32) is equipped with a device (76) for adjusting the pre-stressing of the torsion springs (30).

8. Roof hatch cover in accordance with any one of Claims 1 to 7, characterised by the fact that the device (76) for adjusting the pre-stressing of the torsion spring (30) includes an adjusting lever (78) positively interlocked with the swivel shaft (32) and also an adjusting screw (80) mounted in the bearing housing (68) integral with the turret and capable of moving the adjusting lever (78).

9. Roof hatch cover in accordance with any one of Claims 1 to 8, characterised by the fact that a housing (70) connected to the cover (10) is provided with at least one element (82) which damps the movement into the open position (28).

10. Roof hatch cover in accordance with Claim 9, characterised by the fact that the damping element (82) consists of a pin (88) which can be caused to enter a boring (84) of the housing (70) in opposition to the force of a pressure spring (86).

11. Roof hatch cover in accordance with any one of Claims 1 to 5, characterised by the following features:
    (a) a housing (70) affixed to the cover (10) contains a catch (90) serving to secure the cover (10) in its open position (28),
    (b) the catch (90) is mounted to be pivotable about a shaft (92);
    (c) the catch (90) is held in the secured position by at least one spring-actuated pin (94) and contains a manual lever permanently affixed thereto and serving to release the open position (28).

12. Roof hatch cover in accordance with any one of Claims 1 to 4, characterised by the following features:
    (a) on the shaft (38) connecting the actuating means (22) is mounted an axial outer bearing (98);
    (b) the outer bearing (98) consists of an adjusting nut (102) connected with the shaft (38) via a screw threading (100) and a locking ring (104) connected with the serrated profile (40) of the shaft (38);

(c) the locking ring (104) is provided, on its periphery, with a groove (108) which can be placed on a lug (106) of the adjusting nut (102);
(d) the locking ring (104) and the adjusting nut (102) are interconnected via screws (110).

## Revendications

1. Panneau d'écoutille de toit (10) d'une tourelle de char de combat (12), qui pour le verrouillage et le déverrouillage d'un mécanisme de verrouillage (16) pourvu de coulisseaux de verrouillage (14), comporte des moyens d'actionnement (22, 24) pouvant être commandés à partir de l'intérieur (18) de la tourelle et à partir du côté extérieur (20) de celle-ci et qui, après déverrouillage, peut pivoter, soutenu par un ressort (30), d'une position de fermeture (26) dans une position d'ouverture (28), autour d'un axe de pivotement (32), caractérisé en ce que sur le côté extérieur (34) du panneau d'écoutille (10), il est prévu un dispositif de blocage (36) pour le mécanisme de verrouillage (16), qui pendant toute l'opération d'ouverture du panneau (10), bloque par concordance de forme, un arbre (38) reliant les moyens d'actionnement (22, 24) et en ce que le panneau (10) est équipé d'au moins un ressort de torsion (30) placé autour de l'axe de pivotement (32),

2. Panneau d'écoutille de toit selon la revendication 1, caractérisé en ce que l'arbre (38) du mécanisme de verrouillage (16) présente, sur le côté extérieur (34) du panneau (10), un profilé cannelé (40) qui, pendant toute l'ouverture du panneau (10), est relié par concordance de forme à un coulisseau d'arrêt (44), présentant le même profilé cannelé (42), du dispositif de blocage, le coulisseau d'arrêt (44) pouvant être déplacé de manière que dans une position de fermeture (26) du panneau (10), la cannelure (42) du coulisseau d'arrêt (44) soit désengagée par rapport au profilé cannelé (40) de l'arbre (38).

3. Panneau d'écoutille de toit selon les revendications 1 et 2, caractérisé en ce que le coulisseau d'arrêt (44) présente une cannelure partielle (42) qui se trouve exclusivement à intérieur d'une zone (46) en arc de cercle d'un trou allongé (48), le trou allongé ayant des dimensions telles que le coulisseau d'arrêt (44) soit déplaçable longitudinalement et que dans une première position de fin de course (50), prise pendant l'ouverture du panneau (10), l'arbre (38) soit bloqué par la cannelure partielle (42) et que dans une seconde position de fin de course (52), prise pendant la fermeture du panneau (10), l'arbre (38) puisse se déplacer librement.

4. Panneau d'écoutille de toit selon l'une des revendications 1 à 3, caractérisé par les caractéristiques suivantes :

a) le coulisseau d'arrêt (44) est relié à une tringlerie d'actionnement (54) montée sur le panneau (10) ;

b) sur la tringlerie d'actionnement (54) il est prévu un élément à ressort (56) qui presse une surface de butée (58) de la tringlerie d'actionnement (54) contre une came (60) d'un arbre à cames (62) également monté à l'extérieur sur le panneau (10) ;

c) l'arbre à cames (62) contient un levier d'entraînement (64) prenant appui en position de fermeture (26) du panneau (10) sur le toit (12) de la tourelle et, en position ouverte de l'ouverture de toit (28), se sépare du toit (12) de la tourelle ;

d) le levier d'entraînement (64) est disposé par rapport à la came (60) de manière qu'en position de fermeture (26) du panneau (10), la tringlerie d'actionnement (54) et donc le coulisseau d'arrêt (44) prenne la seconde position de fin de course (52), à l'encontre de la force du ressort (56), tandis que dans la position ouverte (28) du panneau (10), la surface de butée (58) replace la came (60), sous la force du ressort (56) et que le coulisseau d'arrêt (44) prenne la première position de fin de course nécessaire pour bloquer le mécanisme de verrouillage (16).

5. Panneau d'écoutille de toit selon la revendication 1, caractérisé en ce que l'axe de pivotement (32) est monté, solidaire de la tourelle, dans une boîte de palier (68) située sur l'axe de symétrie (66) du panneau (10), et s'engage, sur chacun des deux côtés de cette boîte de palier (68), dans un boîtier (70), relié au panneau (10), et destiné à loger au moins un ressort de torsion (30).

6. Panneau d'écoutille de toit selon la revendication 5, caractérisé en ce que chaque boîtier (70), relié au panneau (10), entoure trois ressorts de torsion (30) juxtaposés et montés à l'intérieur, de manière fixe, sur l'axe de pivotement (32), ressorts dont les extrémités extérieures (62) prennent appui dans un contre-palier (74) solidaire du boîtier.

7. Panneau d'écoutille de toit selon l'une des revendications 1 à 6, caractérisé en ce que l'axe de pivotement (32) est équipé d'un dispositif (76) destiné à régler la précontrainte des ressorts de torsion (30).

8. panneau d'écoutille de toit selon l'une des revendications 1 à 7, caractérisé en ce que le dispositif (76) destiné au réglage de la précontrainte des ressorts de torsion, comprend un levier de réglage (78) relié par concordance de forme à l'axe de pivotement (32) et une vis de réglage (80), placée dans la boîte de palier (68) solidaire de la tourelle et déplaçant le levier de réglage (78).

9. Panneau d'écoutille de toit selon l'une des revendications 1 à 8, caractérisé en ce qu'un bottier (70), relié au panneau (10), est équipé d'au moins un élément (82) amortissant le passage dans la position d'ouverture (28).

10. Panneau d'écoutille de toit selon la revendication 9, caractérisé en ce que l'élément d'amortissement (82) est constitué d'un doigt (88) s'engageant dans un trou (84) du bottier (70), à l'encontre de la force d'un ressort de pression (86).

11. Panneau d'écoutille de toit selon l'une des revendications 1 à 5, caractérisé par les caractéristiques suivantes :

a) un bottier (70), fixé sur le panneau d'écoutille de toit (10), contient un cliquet (90) pour fixer la position d'ouverture (28) du panneau (10) ;

b) le cliquet (90) est monté pivotant autour d'un axe (92) ;

c) le cliquet (90) est maintenu dans la position de blocage, par au moins un doigt (94) soumis à l'action d'un ressort et contient un levier manuel (96), raccordé de manière fixe, pour déverrouiller la position d'ouverture (28).

12. Panneau d'écoutille de toit selon l'une des revendications 1 à 4, caractérisé par les caractéristiques suivantes :

a) un palier extérieur (98) axial est placé sur l'arbre (38) reliant les moyens d'actionnement (22) ;

b) le palier extérieur (98) est constitué d'un écrou de réglage (102) relié à l'arbre (38), par une tige filetée (100) et d'un anneau d'arrêt (104) relié au profilé cannelé (40) de l'arbre (38) ;

c) l'anneau d'arrêt (104) présente périphériquement une rainure (108) s'emboîtant sur un ergot (106) de l'écrou de réglage (102) ;

d) l'anneau d'arrêt (104) et l'écrou de réglage (102) sont assemblés entre eux par des vis (110).

FIG.1

FIG.2

FIG.3

FIG.4

FIG.5

FIG.6

EP 0 387 405 B1

FIG.7

**FIG.8**

**FIG.9**

FIG.10

FIG.11

FIG.12